# EUROPÄISCHE PATENTSCHRIFT

(11) **EP 3 542 636 B1**
(45) Veröffentlichungstag und Bekanntmachung des Hinweises auf die Patenterteilung: **12.05.2021**
(21) Anmeldenummer: 18163017.9
(22) Anmeldetag: 21.03.2018
(51) Int. Cl.: A23C 15/00, A01J 15/00, A21D 13/16, A21D 2/16, A23C 15/12, A23C 15/02

(54) **VERFAHREN ZUR HERSTELLUNG VON INDUSTRIEBUTTER MIT ERHÖHTER HÄRTE**
PROCESS FOR PRODUCING INDUSTRY BUTTER WITH HIGH HARDNESS
PROCÉDÉ DE PRÉPARATION DE BEURRE INDUSTRIEL À DURETÉ ACCRUE

(43) Veröffentlichungstag der Anmeldung: 25.09.2019
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- FR-A1- 2 686 775
- JP-B2- 3 029 687
- S. RØNHOLT ET AL: "The Effect of Capacity, Rotational Speed and Storage on Crystallization and Rheological Properties of Puff Pastry Butter", JOURNAL OF THE AMERICAN OIL CHEMISTS' SOCIETY (JAOCS), Bd. 91, Nr. 1, 1. Oktober 2013 (2013-10-01), Seiten 29-38, XP055490994, DE ISSN: 0003-021X, DOI: 10.1007/s11746-013-2353-6
- S.T. Beckett: "Physico-Chemical Aspects of Food Processing", 6. Dezember 2012 (2012-12-06), Springer science and business media, XP002782895, Seiten 240-242, * das ganze Dokument *
- O'CALLAGHAN TOM F ET AL: "Quality characteristics, chemical composition, and sensory properties of butter from cows on pasture versus indoor feeding systems", JOURNAL OF DAIRY SCIENCE, vol. 99, no. 12, December 2016 (2016-12), pages 9441-9460, XP029815596, ISSN: 0022-0302, DOI: 10.3168/JDS.2016-11271

## Beschreibung

### GEBIET DER ERFINDUNG

Die Erfindung befindet sich auf dem Gebiet der Milchprodukte und betrifft ein Verfahren zur Herstellung von Industriebutter mit erhöhter Härte.

### STAND DER TECHNIK

Zu den beliebtesten Backwaren gehören der Blätterteig und ähnliche Produkte wie etwa Croissants oder Plunder.

Blätterteig (auch *Feuilletage)* ist ein mehrlagiger Ziehteig. In den Grundteig aus Mehl, Salz und Wasser, wird durch mehrfaches Ausrollen und Zusammenschlagen Butter, seltener auch ein anderes Ziehfett wie Margarine, eingearbeitet, was als "Tourieren" bezeichnet wird.

Während des Backens geht der Teig locker und blättrig auf. Durch die Backhitze verdampft das im Teig vorhandene Wasser, dehnt sich dabei aus und hebt das Gebäck an. Die Fettschichten wirken wie eine Sperre, sie lassen den Dampf nicht durch und halten ihn in der Teigschicht, bis das Teiggerüst stabil gebacken ist. Das Aufgehen (die Volumenvergrößerung) des Teiges wird dabei nur durch den im Teig entstehenden Wasserdampf, nicht durch zusätzliche Triebmittel oder Hefe hervorgerufen. Daher wird diese Herstellungsart "physikalische Lockerung" genannt.

Blätterteig ist, abhängig vom Eigengeschmack der verwendeten Fette, weitgehend geschmacksneutral und wird ohne Zuckerzusatz hergestellt. Dadurch eignet er sich sowohl für süße als auch für herzhafte Gebäcke.

Man unterscheidet Blätterteige nach der Art, nach der die Butter bzw. das Fett eingearbeitet wird:

*Deutscher Blätterteig:* hierbei liegen die Fettschichten innen, der Grundteig umschließt ihn (enthält nach den Leitsätzen für Feine Backwaren des deutschen Lebensmittelbuches mindestens 62 Kilogramm Butter, Milchfetterzeugnisse oder Margarine oder praktisch wasserfreie Fette, bezogen auf 100 Kilogramm Getreideerzeugnisse);

*Französischer Blätterteig:* hier umschließen die Fettschichten den Grundteig. Der Vorteil besteht darin, dass der Teig nicht austrocknen oder verkrusten kann, weil die Fettschicht außen liegt;

*Holländischer Blätterteig:* hier das Fett wird würfelförmig (kühl) in den Teig gearbeitet, ohne Ruhepausen touriert (daher auch: *Blitzblätterteig* genannt) und vor allem zu Blätterteigböden verarbeitet, da er nicht so gut aufgeht (hochzieht).

Backen portioniert. Holländischer Blätterteig nimmt durch seine kompakte Struktur eine Sonderstellung ein, denn das Gebäck kann nach dem Backen geschnitten werden. Durch diese Kompaktheit sind die Teige für spezielle Gebäcke, wie Prasselkuchen, Tortenböden, Tortendecken, gut geeignet.

Der Unterschied zwischen Blätterteig und anderen tourierten Gebäcken wie Plunder oder auch Croissants liegt vor allem im Teig. Dem Blätterteig wird keine Hefe zugegeben, im Plunder kommt zusätzlich Hefe als Triebmittel zum Einsatz. Außerdem enthalten die Teige, je nach Bedarf und Rezept, Zucker, Milch und weitere Zutaten. Der in der türkischen, griechischen und arabischen Küche verbreitete ebenfalls tourierte Yufka-, Fyllo- oder Masoukateig ist dem Blätterteig sehr ähnlich. Es sind auch Abwandlungen mit Öl oder Hefe bekannt.

Wichtig ist, dass das fertige Gebäck einerseits nicht unmittelbar nach Butter oder Fett schmeckt, andererseits aber einen buttrigen Gesamteindruck - sowohl optisch wie geschmacklich - hinterlässt, da dies von Verbrauchern als Qualitätsmerkmal angesehen wird.

Das Marktsegment, in dem Blätterteigbackwaren beheimatet sind, ist sehr homogen und lässt kaum Produktvielfalt zu. Über den Verkaufserfolg entscheiden allein Qualität und Preis. Dabei besteht seitens der Verbraucher sehr wohl Interesse an solchen Backwaren, die über zusätzliche sensorische oder geschmackliche Eigenschaften verfügen. Diese sind jedoch in der Auswahl übersichtlich: in der Regel handelt es sich um Croissants oder ähnliches, denen man nachträglich einen Kern aus Schokoladencreme oder Marmelade injiziert hat. Ursächlich ist hier, dass die Herstellung der Produkte praktisch ausschließlich maschinell erfolgt, da es einer millimetergenauen Ausrichtung der Ausrollwalzen bedarf, um einen homogenen Teig und nach dem Abbacken auch ein qualitativ hochwertiges Produkt herzustellen. Für diese Abläufe eignet sich das Einarbeiten weiterer Zutaten, die auch noch den Backprozess überstehen müssen, nur sehr bedingt, wenn überhaupt.

Einen großen Einfluss auf die sensorische Qualität der Blätterteigwaren haben die Natur und natürlich auch die Menge der eingesetzten Butter. Übliche Industriebutter wird durch Rahmreifung - also eine Abfolge von Erwärmen und Abkühlen des Rahms zur Ausbildung einer semi-kristallinen plastischen Masse - und nachfolgender klassischen Verbutterung hergestellt und weist eine Härte von etwa 1 N auf. Da beim Tourieren Wärme in den Teig eingetragen wird, führt die Verwendung von Butter dieser geringen Härte leicht dazu, dass sie ausölt, die Transportbänder der hochautomatisierten Backstraßen verklebt oder Teig auf den Bändern zum Rutschen bringt, was in beiden Fällen zu einem Produktionsabbruch führt. Im Teig selbst kann es dazu führen, dass die Butterphase unterbrochen wird und der Teig bei Backen sich nicht mehr auflockert und somit ein mangelhaftes Produkt entsteht S. Rønholt et al. (The Effect of Capacity, Rotational Speed and Storage on Crystallization and Rheological Properties of Puff Pastry Butter", JOURNAL OF THE AMERICAN OIL CHEMISTS' SOCIETY, 1. Oktober 2013) offenbart ein Verfahren zur Herstellung von Butter für die Herstellung von Blätterteig, wobei Butter, bei einer Temperatur von 57°C in zwei Schabewärmeaustauscher abgekühlt wird.

S.T. Beckett (Physico-Chemical Aspects of Food Processing, 6. Dezember 2012) zeigt ein Verfahren zur Herstellung von Butter für Blätterteig, wobei frische Sahne verbuttert wird, und in zweiSchabewärmeaustauscher gekühlt wird.

Eine erste Aufgabe der vorliegenden Erfindung hat daher darin bestanden, eine Industriebutter zur Verfügung zu stellen, die eine Härte im Bereich von etwa 2 bis etwa 5 N und insbesondere etwa 3 bis 4,5 N aufweist und keine Tendenz zeigt, auszuölen.

Eine zweite Aufgabe ist darin zu sehen, die Butter mit möglichst geringem technischem Aufwand herzustellen und dabei insbesondere auf die viel Zeit beanspruchende Reifung mit nachfolgender Verbutterung zu verzichten.

### BESCHREIBUNG DER ERFINDUNG

Der Gegenstand der vorliegenden Erfindung ist ein Verfahren gemäß Anspruch 1.

Überraschenderweise wurde gefunden, dass sich die Härte handelsüblicher Butter ganz erheblich steigern lässt, wenn man diese soweit erwärmt, dass sie plastisch wird und dann unter Last wieder abkühlt. Dabei ist der Begriff handelsüblich im weitesten Sinne zu verstehen und umfasst auch konventionell hergestellte Industriebutter, die eine entsprechend niedrige Härte aufweist. Unter niedriger Härte, die es zu steigern gilt, ist im Sinne eine Härte im Bereich von etwa 0,5 bis 1,5 N und vorzugsweise etwa 1 N aufweist.

Unter Plastifizierung ist ein Erwärmungsschritt zu verstehen, bei der die Butter sich noch nicht verflüssigt hat, jedoch leicht knet- und formbar wird. Dieser Temperaturbereich kann je nach Fettgehalt der Butter etwa variieren, liegt jedoch typisch im Bereich von etwa 18 bis etwa 25 °C.

Unter dem Begriff "Kühlung unter Last" ist vorzugsweise zu verstehen, dass die wie oben beschrieben plastifizierte Butter einer Kühlung in einem oder mindestens zwei in Reihe geschalteten Schabewärmeaustauschern unterworfen wird, dessen Endprodukt dann eine "gehärtete" Industriebutter darstellt, die eine Härte im Bereich von etwa 2 bis etwa 5N und vorzugsweise etwa 3 bis etwa 4,5 N aufweist. Bei der Kühlung unter Last geschehen zwei Prozesse gleichzeitig: zum einen werden besonders kleine Kristalle erhalten, die dann zweitens miteinander verhaken und so ein besonders stabiles Kristallgitter ausbilden, was einer erhöhten Härte entspricht.

### Herstellverfahren

Der Gegenstand der vorliegenden Erfindung betrifft ein Verfahren zur Herstellung einer Industriebutter mit erhöhter Härte, bestehend aus den folgenden Schritten:
(i) Separation von Rohmilch in eine Magermilch- und eine Rahmfraktion;
(ii) Reifung der Rahmfraktion durch abwechselndes Erwärmen und Abkühlen;
(iii) Verbutterung der gereiften Rahmfraktion bei etwa 10°C in einer Butterungsmachine mit rotierendem Zylinder;
(iv) Erwärmen der so gewonnenen handelsüblichen Butter, die einen Fettgehalt im Bereich von 80 bis 88 Gew.-%, einen Gehalt an fettfreier Trockenmasse im Bereich von 1 bis 3 Gew.-% und eine Wassermenge von maximal 16 Gew.-% aufweist, auf 18 bis 25 °C
(v) Abkühlen der erwärmten Butter in 2 bis 5 in Reihe geschalteten Schabewärmeaustauschern sowie
(vi) Formung der so gewonnenen gehärteten Industriebutter.

Butter ist ein meist aus dem Rahm von Milch hergestelltes Streichfett, das nach EU-Verordnung zu mindestens 80 Prozent aus Milchfett besteht. Beim Butterungsprozess wird der Rahm geschlagen. Dadurch werden die Fettkügelchen des Milchfetts zerstört. Die Fetthülle bricht auf und das enthaltene Fett tritt aus. Jetzt kann sich das Fett untereinander verkleben. Dabei werden Teile der Fetthüllen, Wasser und etwas Milcheiweiß eingeschlossen. Aus der flüssigen Fett-in-Wasser-Emulsion wird eine feste Wasser-in-Fett-Emulsion. Der mit Abstand größte Teil dieser fettfreien Komponenten (Milchserum) tritt als Buttermilch aus. Die Butter selbst wird schließlich zu einer homogenen, geschmeidigen Masse geknetet, die anschließend geformt und abgepackt wird. Insofern stellen die Schritte (i) bis (iii) übliche und dem Fachmann notorisch bekannte Schritte dar.

Die Butterherstellung geht von einer Rahmfraktion aus, die durch Separation bei der Gewinnung von Magermilch aus Roh- bzw. Vollmilch gewonnen wird. Diese Rahmfraktion weist typisch einen Fettgehalt von etwa 40 Gew.-% und kann falls erforderlich durch Standardisierung, d.h. Zugabe von fremdem Rahm auf diesen Wert eingestellt werden.

Der Rahm wird pasteurisiert bzw. sterilisiert und anschließend einer so genannten Reifung unterworfen. Hierunter versteht man abwechselndes Erwärmen und wieder Abkühlen, was zur Ausbildung eines Kristallgitters führt und die Viskosität des Produktes ansteigen lässt. An dieser Stelle können dann zur Aromabildung auch Butterkulturen zugegeben werden bzw. eine Säuerung erfolgen.

Es folgt die eigentliche Verbutterung, bei der der gereifte Rahm bei etwa 10 °C in einer Butterungsmaschine mit rotierendem Zylinder geschlagen und gestoßen wird. Nach dem Abtrennen der Buttermilch wird eine handelsübliche Butter erhalten, die eine Härte im Bereich von etwa 0,5 bis etwa 1,5 N und vorzugsweise etwa 1 N aufweist.

Im Sinne der vorliegenden Erfindung weist die so erhaltene Butterphase einen Fettgehalt im Bereich von etwa 80 bis etwa 88 Gew.-% und insbesondere etwa 81 bis etwa 85 Gew.-% auf.

Diese Butterphase weist einen Gehalt an fettfreier Trockenmasse (FFTM) im Bereich von 1 bis 3 Gew.-% und vorzugsweise etwa 2 Gew.-% auf. Die Mengen an Fett und Trockenmasse ergänzen sich jeweils zu 100 %, wobei die Wassermenge 16 Gew.-% nicht überschreiten darf, da es sich ansonsten nicht mehr um eine Butter gemäß EU-verordnung handelt.

Im nächsten Schritt wird die weiche Butter erwärmt, so dass sie plastisch wird und wieder geformt und geknetet werden kann, aber sich nicht verflüssigt. Dies erreicht man in einem Temperaturbereich von etwa 18 bis 25 °C. Anschließend erfolgt der entscheidende Schritt, bei dem die plastifizierte Butter unter Last, d.h. unter Scherung wieder gekühlt wird. Hierzu werden 2 bis 5 in Reihe geschaltete Schabewärmeaustauscher verwendet, die auch in dieser Anordnung als "Kombinator" bezeichnet werden. Bei einem solchen Bauteil wird das zu kühlende Produkt in das untere Ende des vertikalen Wärmetauschers gepumpt und fließt durch den Zylinder. Es wird permanent gerührt und durch Schaber von der Zylinderwand entfernt. Heiz- oder Kühlmedien strömen in dem ringförmigen Spalt zwischen dem Wärmetauschzylinder und der isolierten Ummantelung. Auf diese Weise wird am Ende des Austauschers als Produkt eine Industriebutter mit einer Temperatur von etwa 10 bis 16 °C abgenommen, die eine Härte im Bereich von etwa 2 bis etwa 5 N und insbesondere etwa 3 bis etwa 4,5 N aufweist.

### BEISPIELE

### BEISPIEL 1

### Herstellung von Industriebutter mit erhöhter Härte im Schabewärmeaustauscher

10 kg handelsübliche Butter mit einem Fettgehalt von 84 Gew.-%, einem Gehalt an fettfreier Trockenmasse von 2 Gew.-% und einer Härte von 1 N wurde unter Rühren auf 25 °C erwärmt, so dass eine plastische Masse erhalten wurde, die jedoch noch keine Flüssigkeit austreten ließ. Die plastifizierte Butter wurde kontinuierlich auf einen Kombinator bestehend aus 4 in Reihe geschaltete Schabewärmeaustauscher vom Typ APV Gerstenbeck-Schröder gegeben. Der Kombinator wies vier Kühlzonen auf, nämlich von 17 auf 21 auf 17 und auf 12 °C und wurde bei einem Druck von 18,5 bar betrieben. Es wurde eine Industriebutter mit einer Temperatur von 10 °C erhalten, die eine Härte von 3,3 N aufwies.

### VERGLEICHSBEISPIEL V1

### Herstellung von Industriebutter im Plattenwärmeaustauscher

10 kg handelsübliche Butter mit einem Fettgehalt von 84 Gew.-%, einem Gehalt an fettfreier Trockenmasse von 2 Gew.-% und einer Härte von 1 N wurde unter Rühren auf 25 °C erwärmt, so dass eine plastische Masse erhalten wurde, die jedoch noch keine Flüssigkeit austreten ließ. Die plastifizierte Butter wurde kontinuierlich auf einen Plattenwärmeaustauscher gegeben, der auf 8 °C gekühlt war und drucklos betrieben wurde. Es wurde eine Industriebutter mit einer Temperatur von 10 °C erhalten, die eine praktisch unveränderte Härte von etwa 1,5 N aufwies.

## Patentansprüche

1. Verfahren zur Herstellung einer Industriebutter mit erhöhter Härte, bestehend aus den folgenden Schritten:
(i) Separation von Rohmilch in eine Magermilch- und eine Rahmfraktion;
(ii) Reifung der Rahmfraktion durch abwechselndes Erwärmen und Abkühlen;
(iii) Verbutterung der gereiften Rahmfraktion bei etwa 10 °C in einer Butterungsmachine mit rotierendem Zylinder;
(iv) Erwärmen der so gewonnenen handelsüblichen Butter, die einen Fettgehalt im Bereich von 80 bis 88 Gew.-%, einen Gehalt an fettfreier Trockenmasse im Bereich von 1 bis 3 Gew.-% und eine Wassermenge von maximal 16 Gew.-% aufweist, auf 18 bis 25 °C
(v) Abkühlen der erwärmten Butter in 2 bis 5 in Reihe geschalteten Schabewärmeaustauschern sowie
(vi) Formung der so gewonnenen gehärteten Industriebutter.

2. Verfahren nach Anspruch 1, **dadurch gekennzeichnet, dass** man Rahm einsetzt, der einen Fettgehalt von mindestens 40 Gew.-% aufweist.

## Claims

1. A process for the preparation of an industrial butter with increased hardness, consisting of the following steps:
(i) separation of raw milk into a skimmed milk fraction and a cream fraction;
(ii) ripening of the cream fraction by alternate heating and cooling;
(iii) churning of the ripened cream fraction at about 10 °C in a butter churn with rotating cylinder;
(iv) heating the commercial butter thus obtained, which has a fat content ranging from 80 to 88 % by weight, a non-fat dry matter content in the range from 1 to 3 % by weight and a water content not exceeding 16 % by weight, at 18 to 25 °C
(v) cooling the heated butter in 2 to 5 scraped heat exchangers connected in series; and
(vi) forming the hardened industrial butter thus obtained.

2. Process according to claim 1, **characterised in that** cream is used which has a fat content of at least 40% by weight.

## Revendications

1. Procédé de fabrication d'un beurre industriel à dureté accrue, comprenant les étapes suivantes :
(i) la séparation du lait cru en une fraction de lait écrémé et une fraction de crème;
(ii) la maturation de la fraction de crème en chauffant et en refroidissant alternativement ;
(iii) barattage de la fraction de crème maturée à environ 10 °C dans une baratteuse à beurre à cylindre rotatif;
(iv) le chauffage à une température de 18 à 25 °C du beurre commercial ainsi obtenu, qui a une teneur en matières grasses comprise entre 80 et 88 % en poids, une teneur en matière sèche non grasse comprise entre 1 et 3 % en poids et une teneur maximale en eau de 16 % en poids
(v) refroidissement du beurre chauffé dans 2 à 5 échangeurs de chaleur raclés montés en série ; et
(vi) le façonnage du beurre industriel durci ainsi obtenu.

2. Le procédé selon la revendication 1, **caractérisé en ce que** l'on utilise une crème qui a une teneur en matière grasse d'au moins 40 % en poids.
